Europäisches Patentamt

European Patent Office

Office européen des brevets

(11) Publication number: **0 268 002**
A2

# (12) EUROPEAN PATENT APPLICATION

(21) Application number: 87101599.6

(22) Date of filing: 06.02.87

(51) Int. Cl.⁴: **A01F 15/00** , A01F 15/14

(30) Priority: 14.11.86 GB 8627263

(43) Date of publication of application:
25.05.88 Bulletin 88/21

(84) Designated Contracting States:
DE ES FR GB IT NL

(71) Applicant: **DEERE & COMPANY**
1 John Deere Road
**Moline Illinois 61265(US)**

(72) Inventor: **Geiser, Jens**
**Hohlstrasse 12**
**D-6660 Zweibrücken(DE)**

(74) Representative: **Collins, Geoffrey Stainton et
al**
**c/o Reddie & Grose 16 Theobalds Road
London WC1X 8PL(GB)**

(54) Machine for forming cylindrical bales of crop.

(57) A machine for continuously forming large cylindrical bales of hay has a baling chamber consisting of a frusto-conical crop receiving portion (18) and a cylindrical crop discharge portion (22). The portions are arranged end-to-end and are defined by rolls (32, 42) which are driven to roll the crop round on itself into the form of a bale (70). The bale is wrapped with twine from a tying device (50), is severed by a cutter (52 or 61), and falls from the downstream end of the discharge portion (22) into a waggon placed below the end.

The axis (24) of the baling chamber is at an angle of 15° to the horizontal so that as the crop progresses through the baling chamber it is at the same time elevated. At discharge the bale is above waggon height. No additional means is necessary to raise the bale.

FIG.2

FIG.3

# Machine for forming cylindrical bales of crop

This invention relates to a baling machine for forming cylindrical bales of crop.

Machines, towed by a tractor, for forming large cylindrical bales of hay (so called "round balers") are well known. The size of the bales is around 1.5 or 2 metres in diameter and in length. As the machine advances, the crop is removed from a windrow by a pick-up mechanism and delivered rearwardly to a baling chamber where it is rolled into a bale between rolls or belts. The completed bale is tied with twine to maintain its shape and is discharged through a gate formed by a rear portion of the machine. One such machine is described in our EP-A-0 151 665.

The feeding of crop to the chamber needs to be halted during tying and discharge, and various proposals have been made to render the process continuous. Basically these involve the provision of an additional chamber which is ahead (in the direction of travel of the machine) of the main baling chamber. This additional chamber can be closed off from the main chamber and so crop can continue to be fed to the former whilst the final steps of the baling procedure are being carried out in the main chamber. After bale discharge, the additional chamber is opened to the main chamber and crop then transferred from it to the main chamber. A machine of this type is described in our EP-A-0 149 368.

A machine which produces a small diameter rod-shaped product of compacted crop is proposed in DE-A-1 948 555. It has a compacting chamber consisting of a frusto-conical portion opening at its larger end into a cylindrical portion, the portions being defined by driven rolls. The axes of the portions are at a slight angle one to the other, but are approximately horizontal. Crop is fed into the frusto-conical portion and finally discharged axially at the end of the cylindrical portion. The process is continuous and the portions are always open to one another there being no necessity to close one off from the other, and therefore the arrangement is simple.

The present invention enables a large cylindrical bale of crop to be produced and delivered directly into a waggon or other transporter without additional means to raise the crop to the necessary height by a simple machine with a chamber comprising a frusto-conical portion and a cylindrical portion, defined by rolls.

According to the present invention the baling machine has:
a baling chamber comprising a frusto-conical crop receiving portion and a cylindrical portion from which a bale can be discharged endwise, which portions share a common geometrical axis, are arranged end-to-end with the larger end of the receiving portion opening into the discharge portion, and are defined by rolls which are arranged to roll the crop into a bale, rolls of the receiving portion being driven; and a cutter arranged to sever the bale, the said axis being at such an angle to the horizontal that the downstream end of the discharge portion is at a sufficient level for the severed bale to be discharged directly into a waggon or other transporter.

Thus by virtue of the upward slope of the geometrical axis of the baling chamber crop is brought to a level at which the bale can be discharged endwise of the chamber directly into a waggon without additional means being necessary to raise the crop.

The angle to the horizontal will generally be in the range 10° to 30° and preferably 15° to 20°, but will of course depend on the length of the baling chamber.

Apparatus is preferably provided for enabling the bale to be wrapped with twine or other tying material comprising a holder for the material and a guide arranged to supply the tying material between neighbouring rolls of the discharge portion to the outer surface of the bale for wrapping round the bale.

Embodiments of the invention will now be described with reference to the accompanying diagrammatic drawings in which:

Fig. 1 shows from above a baling machine drawn by a tractor along a windrow of hay;

Fig. 2 is a view looking from the rear in Fig. 1;

Fig. 3 is a detailed plan view of the machine in Fig. 1 with certain rolls omitted for the sake of clarity;

Fig. 4 is a detailed view similar to Fig. 3 but from the rear of the machine;

Fig. 5 is a section on the line V - V of Fig. 4;

Fig. 6 is a section on the line VI - VI of Fig. 3;

Fig. 7 shows a bale cutter of the machine in relation to a bale in end view; and

Fig. 8 shows another form of cutter in a similar view to that in Fig. 7.

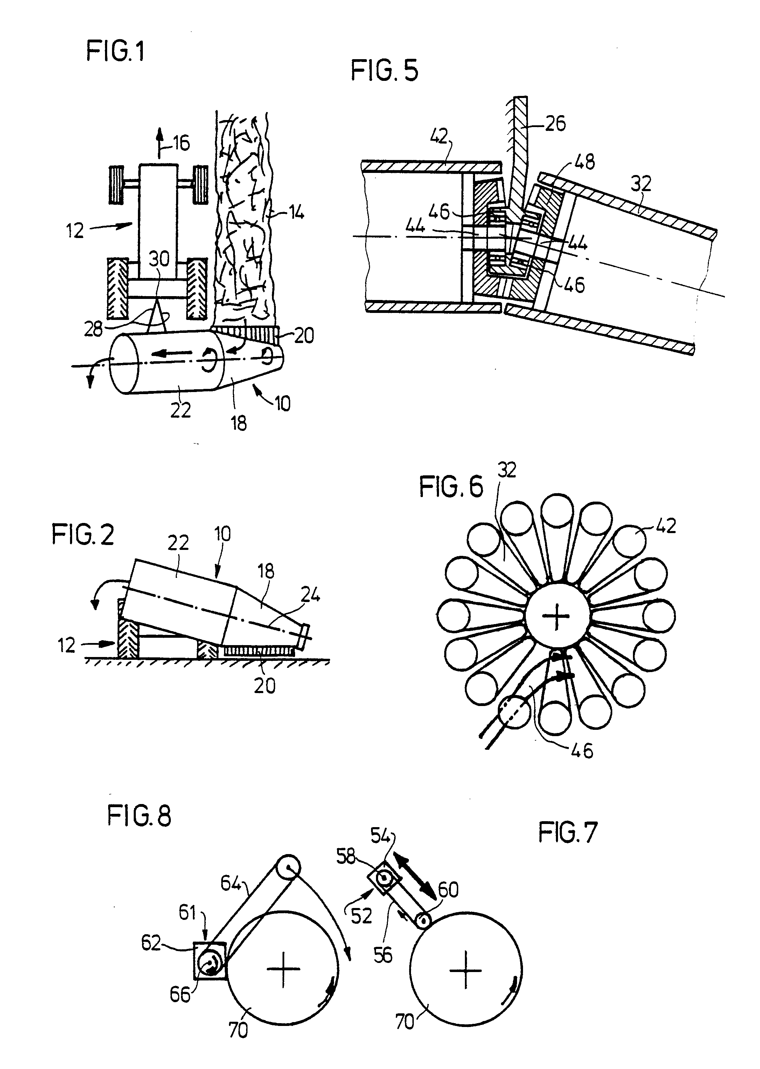

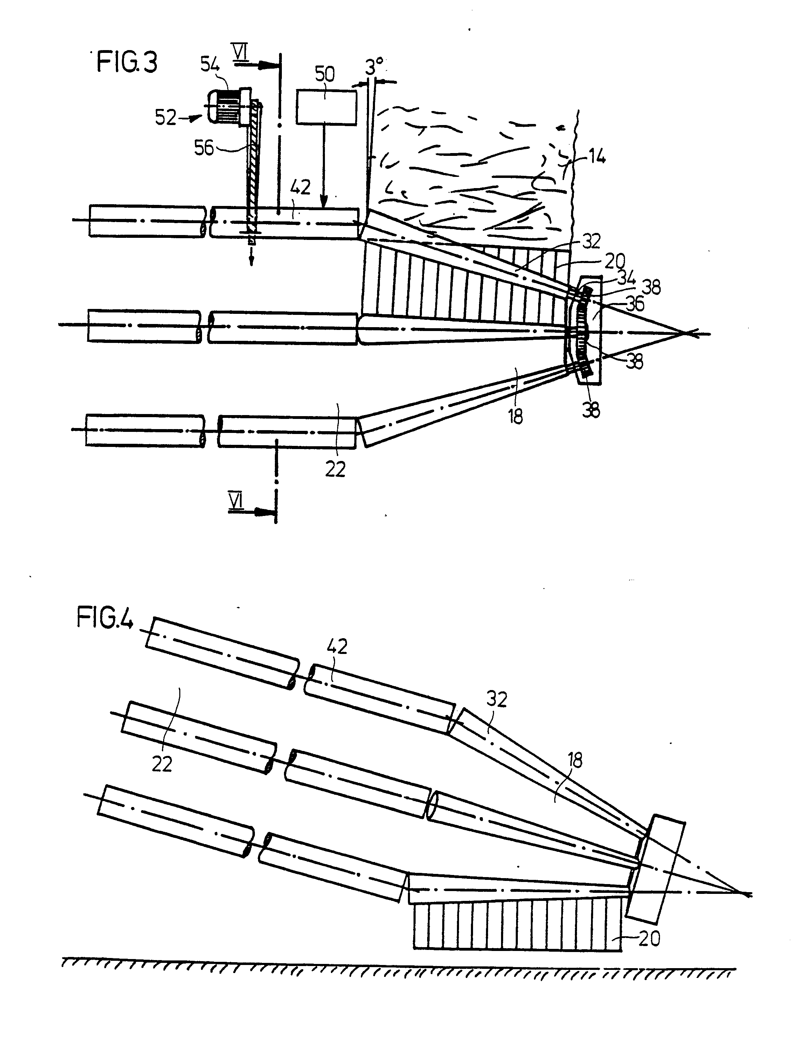

In Figures 1 and 2 a baling machine 10 is drawn by a tractor 12 along a windrow 14 of hay in the direction of arrow 16. The machine 10 has a baling chamber consisting of a frusto-conical crop receiving portion 18, to which crop is fed by a pick-up 20 which lifts the hay from the windrow 14, and a cylindrical crop discharge portion 22 into which the larger end of the portion 18 opens. The portions 18, 22 share a common axis 24 which runs laterally of the windrow 14 and the tractor 12 and which is at an angle of about 15° to the horizontal so that the hay is raised from pick-up level sufficiently to be delivered as a cylindrical bale endwise of the discharge portion 22 to a waggon (not shown). Crop flow is indicated by (unnumbered) arrows particularly in Fig. 1.

The machine 10 will now be described in more detail.

It has a support frame 26 which is shown only in Fig. 5 and only in part and which includes two drawing beams 28 extending forwardly in a converging manner to meet at a point of attachment 30 to the tractor 12. Power is delivered from the tractor by a conventional power take-off shaft (not shown). The frame 26 not only supports the crop receiving and discharge portions 18, 22 but also the pick-up 20 which in the working position of Fig. 1 straddles the windrow 14. The length of the pick-up 20 is coterminous with that of the receiving portion 18 and it extends below the forward half of this portion as best seen in Figures 3 and 4.

The crop receiving portion 18 is formed by some fifteen driven rolls 32. Although these are all shown in Fig. 6, many are omitted in Figures 3 and 4 in order that the overall structure can be more easily discerned. The rolls 32 are disposed so as to follow geometrically the contour of a frusto-cone (each roll running from end to end of the frusto-cone) and are themselves frusto-conical, the smaller diameter ends of the rolls being at the smaller diameter upstream end of the receiving portion 18. The rolls 32 are rigidly attached to trunnion shafts 34, at their upstream ends, which shafts extend into a gearbox 36 in which they are splined to meshing drive gears 38 driven from the power take-off shaft of the tractor 12. The shafts 34 are carried, in a manner not shown, by the support frame 26. The fifteen rolls 32 are spaced regularly apart except that a gap where a roll might otherwise fit is left between two neighbouring rolls on the underside associated with a rearward discharge portion of the pick-up 20 to provide an inlet 40 (Fig. 6) for crop to be delivered into the receiving portion 18 from the pick-up.

The crop discharge portion 22 is also formed from rolls, i.e. rolls 42, this time numbering sixteen in all. The sixteenth roll is in a position corresponding to the inlet 40 and is an idler roll, whilst the remaining fifteen rolls are aligned with those in the crop receiving portion 18. They follow the contour of a cylinder (each roll running from end to end of the cylinder) and are driven by the rolls 32 via a transmission arrangement, shown in Fig. 5. Associated ends of the rolls 32, 42 have axial trunnion shafts 44 journalled in bearings 46 carried by the support frame 26. The shafts 44 are splined inwardly of the bearings 46 to bevel gears 48 which encompass the bearings and which mesh on the radially inner side of the rolls so transmitting the drive from the rolls 32 to the rolls 42.

At the downstream or distal end of the discharge portion 22 the rolls 42 can be journalled, in a manner not shown, via further trunnion shafts in a plate which in turn is carried by the support frame 26.

A bale tying device 50 indicated purely diagrammatically comprising a holder for twine or other tying material and a guide (not individually shown) is mounted on the support frame 26 exteriorly of the discharge portion 22 at its upstream end at the leading side with respect to the direction of travel of the machine so as to supply twine continuously between a pair of neighbouring rolls of the dis charge portion 22 to the outer surface of the bale being formed to wrap round it in order to secure the form of the bale.

A cutter 52 (Fig. 7) is similarly positioned on the support frame 26, but just downstream of the tying device 50. The cutter 52 comprises an electric motor 54 and continuous cutting chain 56 trained over a pair of spaced apart sprockets 58, 60 of which sprocket 58 is driven by the motor. The cutter 52 is movable progressively (on a radial path in Fig. 7) between an inoperative position at which it is clear of the discharge portion 22 and a "cut completed" position in which it passes between neighbouring rolls of the rolls 42 to the axis 24. The cutter 52 can also move lengthwise of the discharge portion 22 to vary the position of the cut it makes when desired. If necessary, the roll configuration can be provided with an aperture to enable unhindered entry of the cutter 52 into the discharge portion 22.

Alternatively a cutter 61 (in Fig. 8) can be disposed just beyond the downstream end of the discharge portion 22 on the support frame 26. This cutter 61 has an electric motor 62 and a cutting wire 64 trained over a sprocket 66 driven by the motor 62 and over a further sprocket 68 which is swingable about the axis of the sprocket 66 to bring the cutting wire 64 laterally across the end of the portion 22.

In operation the machine functions as follows. Hay from the windrow 14 is delivered rearwardly and upwardly through the inlet 40 of the crop receiving portion 18 where it is rolled round upon itself by the rolls 32, driven through the gearbox 36, in a clockwise direction when viewed from right to left in Fig. 1, the rolls turning in an anti-clockwise direction. The crop also has a component of motion from right to left imparted to it by virtue of the frusto-conical form of the portion 18. Crop enters the portion along its entire length.

The crop passes smoothly from the receiving portion 18 to the discharge portion 22 and advances further, the crop still turning in the clockwise direction by virtue of the rotation of the rolls 42. With the tractor still advancing, the pick-up 20 still gathering and feeding the hay, and twine still being supplied, a bale 70 is completed.

When cutter 52 (Fig. 7) is used, the cutter is then triggered automatically into operation moving from its inoperative position gradually to its "cutter completed" position severing the completed bale 70. The cutter 52 automatically withdraws, and the bale 70 is pushed by freshly fed crop through the downstream end of the portion 22 onto a waggon or other bale transporter (not shown) placed under the end for removal of the bale.

When cutter 61 (Fig. 8) is employed rather than the cutter 52, it is triggered when a predetermined length of bale protrudes beyond the downstream end of the discharge portion 22 and cuts as described above. Again the bale falls into a waiting waggon.

The cutter 52 or 61 serves to sever both the bale and the twine, but if desired separate cutters can be used.

Although it is preferred positively to drive the rolls 42 of the discharge portion 22, they can be simply idler rolls.

The whole operation is continuous as the baling chamber is constantly fed with crop whilst baling, tying and discharge are taking place, and a bale is produced in a simple, efficient manner, and is raised to above waggon height without the need for additional lifting means.

## Claims

1. A baling machine for forming cylindrical bales of crop characterised in that the machine (10) has: a baling chamber comprising a frusto-conical crop receiving portion (18) and a cylindrical portion (22) from which a bale can be discharged endwise, which portions share a common geometrical axis (24), are arranged end-to-end with the larger end of the receiving portion (18) opening into the discharge portion (22), and are defined by rolls (32, 42) which are arranged to roll the crop into a bale, rolls (32) of the receiving portion being driven; and a cutter (52, 61) arranged to sever the bale, the said axis (24) being at such an angle to the horizontal that the downstream end of the discharge portion (22) is at a sufficient level for the severed bale to be discharged directly into a waggon or other transporter.

2. A baling machine according to claim 1 characterised in that the axis (24) is at an angle to the horizontal in the range 10° to 30°.

3. A baling machine according to claim 2 characterised in that the range is 15° to 20°.

4. A baling machine according to any preceding claim characterised in that rolls (32, 42) in both said portions (18, 22) are drivable.

5. A baling machine according to claim 4 characterised in that rolls (42) in the discharge portion (22) are drivable via rolls (32) in the crop receiving portion (18).

6. A baling machine according to any preceding claim characterised in that rolls (32) of the receiving portion (18) are drivable via a gearbox (36) mounted at its smaller diameter end.

7. A baling machine according to any preceding claim characterised in that the rolls (32) of the receiving portion (18) are frusto-conical with their larger diameter ends at the larger diameter end of the receiving portion (18).

8. A baling machine according to any preceding claim characterised in that the machine (10) has a pick-up (20) for crop in a windrow (14), the pick-up (20) being disposed below the receiving portion (18) so as to supply crop directly to the underside thereof between neighbouring rolls (32) of the portion (18).

9. A baling machine according to any preceding claim characterised in that the cutter (52) is mounted for cutting movement, in a direction which is radial with respect to the discharge portion (22), between an inoperative position outside the discharge portion (22) and a cut completed position at the axis (24) of the discharge portion (22).

10. A baling machine according to claim 9 characterised in that the cutter (52, 61) is mounted for adjustment movement lengthwise of the discharge portion (22).

11. A baling machine according to any of claims 1 to 8 characterised in that the cutter (61) is mounted for cutting movement which is transverse of the downstream end of the discharge portion (22) and which is external of the discharge portion (22).

12. A baling machine according to any preceding claim characterised in that the machine (10) has a bale tying device (50), comprising a holder for tying material and a guide, arranged to supply the tying material between neighbouring rolls (42) of the discharge portion (22) to the outer surface of a said bale for wrapping round the bale.

FIG.1

FIG. 5

FIG.2

FIG. 6

FIG.8

FIG.7

0 268 002

FIG. 3

FIG. 4